(19) Europäisches Patentamt
European Patent Office
Office européen des brevets

(11) **EP 2 921 321 B1**

(12) **EUROPEAN PATENT SPECIFICATION**

(45) Date of publication and mention
of the grant of the patent:
**20.09.2017 Bulletin 2017/38**

(21) Application number: **13859829.7**

(22) Date of filing: **29.07.2013**

(51) Int Cl.:
**B60C 5/14** (2006.01)      **C08L 7/00** (2006.01)
**C08L 23/22** (2006.01)      **C08L 53/02** (2006.01)
**B60C 1/00** (2006.01)

(86) International application number:
**PCT/JP2013/070467**

(87) International publication number:
**WO 2014/087697 (12.06.2014 Gazette 2014/24)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.12.2012 JP 2012265358**

(43) Date of publication of application:
**23.09.2015 Bulletin 2015/39**

(73) Proprietor: **Sumitomo Rubber Industries, Ltd.
Kobe-shi, Hyogo 651-0072 (JP)**

(72) Inventors:
• **MASUI, Tomomi
Kobe-shi, Hyogo 651-0072 (JP)**

• **SUGIMOTO, Mutsuki
Kobe-shi, Hyogo 651-0072 (JP)**

(74) Representative: **Manitz Finsterwald Patentanwälte
PartmbB
Martin-Greif-Strasse 1
80336 München (DE)**

(56) References cited:
**EP-A1- 2 415 617        EP-A1- 2 774 779
WO-A1-2012/157322    WO-A1-2012/157322
JP-A- 2012 051 537      JP-A- 2012 122 050**

**Description**

TECHNICAL FIELD

The present invention relates to a pneumatic tire comprising an inner liner.

BACKGROUND ART

In recent years, weight saving in tires has been pursued because of strong social demands for reducing the fuel efficiency of automobiles. Among tire components, weight saving and the like have also been pursued in an inner liner, which is placed inwardly in a tire radius direction, and serves to reduce the amount of leakage of air from the inside to the outside of a pneumatic tire (the amount of air permeation) to improve the air permeation resistance.

At present, for a rubber composition for an inner liner, butyl-based rubber containing 70 to 100% by mass of butyl rubber and 30 to 0% by mass of natural rubber is used to improve the air permeation resistance of a tire. In addition to butylene, the butyl-based rubber contains about 1% by mass of isoprene, which, together with sulfur, a vulcanization accelerator, and zinc oxide, allows crosslinking with adjacent rubber. In general formulations, the above-described butyl-based rubber requires a thickness of 0.6 to 1.0 mm for tires for passenger cars, and a thickness of about 1.0 to 2.0 mm for tires for trucks and buses.

To pursue weight saving in tires, therefore, a proposal has been made to use, for an inner liner, a thermoplastic elastomer superior in air permeation resistance than the butyl-based rubber, and can reduce the thickness of the inner liner.

Japanese Patent Laying-Open No. 2008-174037 (PTD 1) proposes improving flection resistance in a pneumatic tire having an air permeation preventing layer on an inner side of a carcass layer. The air permeation preventing layer is made of a thermoplastic resin or a thermoplastic elastomer composition containing the thermoplastic resin and an elastomer. The flection resistance is improved by configuring the pneumatic tire such that an average thickness Gs of the air permeation preventing layer in a region Ts from the vicinity of a maximum width end of a belt layer to a tire maximum width becomes thinner than an average thickness Gf of the air permeation preventing layer in a region Tf from the tire maximum width to a bead toe. With this structure, however, peeling may occur between the rubber layer of the carcass ply and the air permeation preventing layer.

EP 2 774 779 A1, which is a prior art document under Article 54 (3) EPC, discloses a pneumatic tire with an inner liner being made of two layers, wherein the first layer includes a styrene-isobutylene-styrene triblock copolymer, the second layer includes at least one of styrene-isoprene-styrene triblock copolymer and/or styrene-isobutylene diblock copolymer, and wherein the ratio Gs/Gb is 0.5 to 0.7.

EP 2 415 617 A1 discloses a polymer laminate for an inner liner including a first layer and a second layer, wherein the first layer contains 5 to 40% by mass of a styrene-isobutylene-styrene triblock copolymer and 60 to 95% by mass of natural rubber, isoprene rubber and/or butyl rubber, wherein the second layer comprises a thermoplastic elastomer.

WO 2012/157322 A1 discloses an inner liner having a ratio of Gs/Gb of 0.3 to 0.75 and preferably of 0.5 to 0.75.

CITATION LIST

PATENT DOCUMENT

PTD 1: Japanese Patent Laying-Open No. 2008-174037

SUMMARY OF INVENTION

TECHNICAL PROBLEM

An object of the present invention is to provide a pneumatic tire that is excellent in air permeation resistance, crack resistance performance, and riding comfort, and having reduced rolling resistance.

SOLUTION TO PROBLEM

The present invention provides a pneumatic tire including an inner liner on an inner side of the tire, the inner liner including a first layer including a first polymer composition having a polymer component containing not less than 5% by mass and not more than 70% by mass of a styrene-isobutylene-styrene triblock copolymer, and not less than 30% by mass and not more than 95% by mass of at least one rubber component selected from the group consisting of a natural rubber, an isoprene rubber, and a butyl rubber; and a second layer including a second polymer composition having a polymer component containing not less than 10% by mass and not more than 85% by mass of at least any of a styrene-isoprene-styrene triblock copolymer and a styrene-isobutylene diblock copolymer, and not less than 10% by mass and not more than 90% by mass of at least one rubber component selected from the group consisting of a natural rubber, an isoprene rubber, and a butyl rubber, the first layer being placed inwardly in a tire radius direction, and the inner liner having an average thickness Gs in a buttress region Rs from a tire maximum width position to a position corresponding to a belt layer end Lu an average thickness Gb in a bead region Rb from the tire maximum width position to a bead toe, wherein the ratio of average thickness Gs in the buttress region of the inner liner to average thickness Gb in the bead region (Gs/Gb) is not less than 0.5 and not more than 0.7.

Preferably, in the pneumatic tire according to the present invention, average thickness Gs of the buttress region in the inner liner is not less than 0.06 mm and not more than 0.30 mm.

Preferably, in the pneumatic tire according to the present invention, at least any of the first polymer composition and the second polymer composition contains, based on 100 parts by mass of the polymer component, not less than 0.1 parts by mass and not more than 5 parts by mass of sulfur, not less than 1 part by mass and not more than 5 parts by mass of stearic acid, not less than 0.1 parts by mass and not more than 8 parts by mass of zinc oxide, not less than 0.1 parts by mass and not more than 5 parts by mass of an antioxidant, and not less than 0.1 parts by mass and not more than 5 parts by mass of a vulcanization accelerator.

ADVANTAGEOUS EFFECTS OF INVENTION

According to the present invention, there is provided a pneumatic tire that is excellent in air permeation resistance, crack resistance performance, and riding comfort, and having reduced rolling resistance.

BRIEF DESCRIPTION OF DRAWINGS

Fig. 1 is a schematic cross-sectional view illustrating a right half of a pneumatic tire according to one embodiment of the present invention.
Fig. 2 is a schematic cross-sectional view illustrating an inner liner according to one embodiment of the present invention.
Fig. 3 is a schematic cross-sectional view illustrating an inner liner according to one embodiment of the present invention.

DESCRIPTION OF EMBODIMENTS

<Pneumatic Tire>

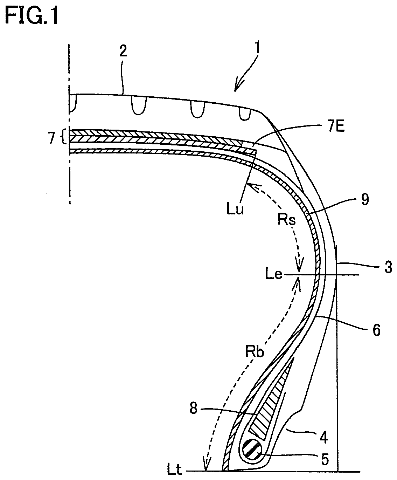

One embodiment of a pneumatic tire of the present invention will be described with reference to the drawings. Fig. 1 is a cross-sectional view of a right half of a pneumatic tire for a passenger car. Pneumatic tire 1 has a tread portion 2, and a side-wall portion 3 and a bead portion 4 forming a troidal shape from the ends of the tread portion. A bead core 5 is embedded in bead portion 4. Moreover, a carcass ply 6 and a belt layer 7 are placed. Carcass ply 6 is provided to extend from one bead portion 4 to the other bead portion, and is anchored by folding its ends around bead cores 5. Belt layer 7, which is formed of at least two plies, is placed outside a crown portion of carcass ply 6.

Belt layer 7 is placed such that two plies, which are generally formed of cords such as steel cords or aramid fibers, are placed to allow the cords to cross each other between the plies normally at an angle of 5° to 30° relative to a tire circumferential direction. It should be noted that topping rubber layers can be provided on the outer sides of the ends of the belt layer to reduce peeling in the ends of the belt layer. Furthermore, in the carcass ply, organic fiber cords of polyester, nylon, aramid, or the like are arranged at substantially 90° relative to the tire circumferential direction. In a region surrounded by the carcass ply and its folded portion, a bead apex 8 is placed to extend from an upper end of bead core 5 in a sidewall direction. Furthermore, an inner liner 9 is placed inwardly relative to carcass ply 6 in a tire radial direction, so as to extend from one bead portion 4 to the other bead portion 4.

Inner liner 9 is formed such that an average thickness Gs of inner liner 9 in a buttress region Rs from a tire maximum width position Le to a position corresponding to a belt layer end Lu becomes thinner than an average thickness Gb of inner liner 9 in a bead region Rb from tire maximum width position Le to a bead toe Lt.

Since the thickness of the inner liner in buttress region Rs is made thinner, even if shear deformation due to repeated flection deformation occurs in that region during running with the tire, the stress can be relieved, and cracks can be prevented from occurring.

To effectively relieve stress due to the flection deformation, a ratio of average thickness Gs in buttress region Rs of the inner liner to average thickness Gb in bead region Rb (Gs/Gb) is set to not less than 0.5 and not more than 0.7. Furthermore, to attain an effect of relieving stress in the buttress region while maintaining air pressure retaining performance, average thickness Gs of buttress region Rs in the inner liner is preferably not more than 0.06 mm and not less than 0.30 mm.

<Inner Liner>

In one embodiment of the present invention, the inner liner used in the pneumatic tire includes a first layer and a second layer.

<First Layer>

The first layer includes a first polymer composition having a polymer component containing not less than 5% by mass and not more than 70% by mass of a styrene-isobutylene-styrene triblock copolymer (hereinafter also referred to as the SIBS), and not less than 30% by mass and not more than 95% by mass of at least one rubber component selected from the group consisting of a natural rubber, an isoprene rubber, and a butyl rubber.

(SIBS)

The isobutylene block of the SIBS contributes to providing a polymer film made of the SIBS with excellent air permeation resistance. The inner liner produced with the SIBS, therefore, has excellent air permeation resistance. Furthermore, since the SIBS has a completely saturated molecular structure except for its aromatic rings, the SIBS is unlikely to become deteriorated and hardened, and has excellent durability. The use of the SIBS allows a decrease in the thickness of the film, thus allowing weight saving in a tire to achieve improved fuel efficiency.
While the molecular weight of the SIBS is not particularly limited, a weight-average molecular weight measured by GPC is preferably 50,000 to 400,000, from the viewpoint of the rubber elasticity and fluidity of the SIBS, as well as moldability to the inner liner. If the weight-average molecular weight is less than 50,000, the rubber elasticity, tensile strength, and tensile elongation of the SIBS may deteriorate. On the other hand, if the weight-average molecular weight exceeds 400,000, deterioration of the fluidity of the SIBS may cause moldability (extrusion moldability, for example) to the inner liner to deteriorate. From the viewpoint of achieving better air permeation resistance and durability, the SIBS preferably has a styrene component content of 10 to 40% by mass.
The SIBS can be obtained using a general polymerization method for a vinyl-based compound, such as a living cationic polymerization method.

(Rubber Component)

The first polymer composition contains a rubber component. The rubber component is capable of providing the first polymer composition with tackiness before vulcanization to the second layer. Moreover, the rubber component undergoes a vulcanization reaction with sulfur, to thereby provide the first polymer composition with vulcanization adhesion to the second layer.
The rubber component contains at least one selected from the group consisting of a natural rubber, an isoprene rubber, and a butyl rubber. Among the above, the rubber component preferably contains a natural rubber, from the viewpoint of breaking strength and adhesiveness. The rubber component content in the polymer component of the polymer composition is preferably not less than 30% by mass and not more than 95% by mass. If the rubber component content is less than 30% by mass, the viscosity of the polymer composition will increase to cause extrusion moldability to deteriorate, and hence, it may be impossible to make the first layer thin. On the other hand, if the rubber component content exceeds 95% by mass, the air permeation resistance of a polymer sheet may deteriorate. The rubber component content is preferably not less than 70% by mass and not more than 90% by mass, from the viewpoint of tackiness before vulcanization and vulcanization adhesion.

(Sulfur)

The first polymer composition preferably contains sulfur. As the sulfur, sulfur generally used in the rubber industry for vulcanization can be used, and insoluble sulfur is particularly preferably used. As used herein, insoluble sulfur refers to sulfur obtained by heating and quenching natural sulfur $S_8$, and polymerizing it so as to become $S_x$ (x = 100,000 to 300,000). The use of insoluble sulfur can prevent blooming that would usually occur when sulfur is used as a rubber vulcanization agent.

The sulfur content is preferably not less than 0.1 parts by mass and not more than 5 parts by mass, based on 100 parts by mass of the polymer component. If the sulfur content is less than 0.1 parts by mass, a vulcanization effect of the rubber component cannot be attained. On the other hand, if the sulfur content exceeds 5 parts by mass, the hardness of the polymer composition will increase, so that when it is used for the inner liner, the durability of the pneumatic tire may deteriorate. The sulfur content is more preferably not less than 0.3 parts by mass and not more than 3.0 parts by mass.

(Other Additives)

The first polymer composition can contain additives such as stearic acid, zinc oxide, an antioxidant, a vulcanization accelerator, and the like.

Stearic acid functions as a vulcanization assistant for the rubber component. The stearic acid content is preferably not less than 1 part by mass and not more than 5 parts by mass, based on 100 parts by mass of the polymer component. If the stearic acid content is less than 1 part by mass, an effect of stearic acid as the vulcanization assistant cannot be attained. On the other hand, if the stearic acid content exceeds 5 parts by mass, the viscosity of the polymer composition will decrease, which may undesirably cause breaking strength to decrease. The stearic acid content is more preferably not less than 1 part by mass and not more than 4 parts by mass.

Zinc oxide functions as a vulcanization assistant for the rubber component. The zinc oxide content is preferably not less than 0.1 parts by mass and not more than 8 parts by mass, based on 100 parts by mass of the polymer component. If the zinc oxide content is less than 0.1 parts by mass, an effect of zinc oxide as the vulcanization assistant cannot be attained. On the other hand, if the zinc oxide content exceeds 8 parts by mass, the hardness of the polymer composition will increase, and the durability of the pneumatic tire may deteriorate. The zinc oxide content is more preferably not less than 0.5 parts by mass and not more than 6 parts by mass.

An antioxidant functions to prevent a series of degradation phenomena such as oxidation degradation, thermal degradation, ozone degradation, and fatigue degradation. Antioxidants are classified into primary antioxidants including amines and phenols, and secondary antioxidants including sulfur compounds and phosphites. A primary antioxidant functions to donate hydrogen to various polymer radicals to stop a chain reaction of autooxidation, and a secondary antioxidant exhibits a stabilizing effect by turning hydroxyperoxide into a stable alcohol.

Examples of antioxidants include amines, phenols, imidazoles, phosphors, thioureas, and the like. One of the antioxidants mentioned above may be used solely, or two or more of them may be used in combination. N-(1,3-dimethylbutyl)-N'-phenyl-p-phenylenediamine is particularly preferably used. The antioxidant content is preferably not less than 0.1 parts by mass and not more than 5 parts by mass, based on 100 parts by mass of the polymer component. If the antioxidant content is less than 0.1 parts by mass, an antioxidant effect cannot be attained. On the other hand, if the antioxidant content exceeds 5 parts by mass, the polymer composition will undergo the blooming phenomenon. The antioxidant content is more preferably not less than 0.3 parts by mass and not more than 4 parts by mass.

Examples of vulcanization accelerators include thiurams, thiazoles, thioureas, dithiocarbamates, guanidines, sulfenamides, and the like. One of these vulcanization accelerators may be used solely, or two or more of them may be combined. Dibenzothiazyl disulfide is particularly preferably used. The vulcanization accelerator content is preferably not less than 0.1 parts by mass and not more than 5 parts by mass, based on 100 parts by mass of the polymer component. If the vulcanization accelerator content is less than 0.1 parts by mass, a vulcanization acceleration effect cannot be attained. On the other hand, if the vulcanization accelerator content exceeds 5 parts by mass, the hardness of the polymer composition will increase, and the durability of the pneumatic tire may deteriorate. Raw material costs of the polymer composition will also increase. The vulcanization accelerator content is more preferably not less than 0.3 parts by mass and not more than 4 parts by mass.

The first polymer composition can contain other additives such as a reinforcing agent, a vulcanization agent, various oils, a softener, a plasticizer, a coupling agent, and the like.

(Thickness of First Layer)

The average thickness of the first layer is preferably not less than 0.05 mm and not more than 0.6 mm. If the thickness of the first layer is less than 0.05 mm, the first layer may be broken by a pressing pressure during the vulcanization of a green tire in which the inner liner is used, and thus, an air leak phenomenon may occur in the resulting tire. On the other hand, if the thickness of the first layer exceeds 0.6 mm, the weight of the tire will increase, and the fuel efficiency performance will deteriorate. The thickness of the first layer is preferably not less than 0.05 mm and not more than 0.4 mm.

The first layer can be obtained by forming the polymer composition into a film by using a general method of forming a thermoplastic resin or a thermoplastic elastomer into a film, such as extrusion molding or calender molding.

In the rubber composition of the first layer, the SIBS, which is a thermoplastic elastomer, forms a matrix phase, and the rubber component is dispersed as an island phase. Additive components such as sulfur react with this state to cause the rubber component in the island phase to undergo a crosslinking reaction. The rubber component is dynamically crosslinked in an extruder, resulting in so-called dynamic crosslinking. Even though the rubber component is crosslinked in the extruder, since the matrix phase of the system is made of a thermoplastic elastomer component, the shear viscosity of the entire system is maintained low, so that extrusion molding is possible.

<Second Layer>

The second layer includes a second polymer composition having a polymer component containing not less than 10% by mass and not more than 85% by mass of at least any of a styrene-isoprene-styrene triblock copolymer (hereinafter also referred to as the SIS) and a styrene-isobutylene diblock copolymer (hereinafter also referred to as the SIB), and not less than 10% by mass and not more than 90% by mass of at least one rubber component selected from the group consisting of a natural rubber, an isoprene rubber, and a butyl rubber.

(SIS and SIB)

Since the isoprene block of the SIS and the isobutylene block of the SIB are soft segments, a polymer film containing the SIS or SIB can easily be vulcanized and adhered to the rubber component. When an inner liner including the second layer containing the SIS or SIB is used, therefore, a pneumatic tire having excellent adhesive strength between the inner liner and the rubber layer of the carcass ply can be obtained. The durability and the riding comfort of the pneumatic tire can thus be improved.

While the molecular weight of the SIS is not particularly limited, a weight-average molecular weight measured by GPC is preferably 100,000 to 290,000, from the viewpoint of the rubber elasticity of the SIS, as well as moldability to the inner liner. If the weight-average molecular weight is less than 100,000, the rubber elasticity and tensile strength of the SIS may deteriorate. On the other hand, if the weight-average molecular weight exceeds 290,000, deterioration of the fluidity of the SIS may cause moldability (extrusion moldability, for example) to the inner liner to deteriorate. The styrene component content in the SIS is preferably 10 to 30% by mass, from the viewpoint of the tackiness and rubber elasticity of the SIS, as well as the adhesive strength of the second layer to the first layer and the carcass ply.

With respect to the degree of polymerization of each of the blocks forming the SIS, the degree of polymerization of the isoprene block is preferably about 500 to 5,000, and the degree of polymerization of the styrene block is about 50 to 1,500, from the viewpoint of the rubber elasticity and handleability of the SIS. The SIS can be obtained using a general polymerization method for a vinyl-based compound, such as a living cationic polymerization method.

As the SIB, a straight-chain SIB is preferably used from the viewpoint of rubber elasticity, as well as the adhesive strength of the second layer to the first layer and the carcass ply. While the molecular weight of the SIB is not particularly limited, a weight-average molecular weight measured by GPC is preferably 40,000 to 120,000, from the viewpoint of the rubber elasticity of the SIB, as well as moldability to the inner liner. If the weight-average molecular weight is less than 40,000, the rubber elasticity and tensile strength of the SIB may deteriorate. On the other hand, if the weight-average molecular weight exceeds 120,000, deterioration of the fluidity of the SIB may cause moldability (extrusion moldability, for example) to the inner liner to deteriorate. The styrene component content in the SIB is preferably 10 to 35% by mass, from the viewpoint of the tackiness and rubber elasticity of the SIB, as well as the adhesive strength of the second layer to the first layer and the carcass ply.

The SIB can be obtained using a general polymerization method for a vinyl-based compound, such as a living cationic polymerization method. The second polymer composition may contain the SIS and SIB, or may have a multilayer structure of a layer containing the SIS and a layer containing an SIB.

(Rubber Component)

The second polymer composition contains a rubber component. The rubber component is capable of providing the second polymer composition with tackiness before vulcanization to adjacent members such as the first layer and the carcass ply. Moreover, the rubber component undergoes a vulcanization reaction with sulfur, to thereby provide the polymer composition with vulcanization adhesion to the adjacent members such as the first layer and the carcass ply. The rubber component contains at least one selected from the group consisting of a natural rubber, an isoprene rubber, and a butyl rubber, and, among the above, the rubber component preferably contains a natural rubber, from the viewpoint of breaking strength and adhesiveness.

The rubber component content in the polymer component of the polymer composition is preferably not less than 10% by mass and not more than 90% by mass. If the rubber component content is less than 10% by mass, the viscosity of the polymer composition will increase to cause extrusion moldability to deteriorate, and hence, it may be impossible to make the second layer thin. On the other hand, if the rubber component content exceeds 90% by mass, the air permeation resistance of the second layer may deteriorate. When the amount of the rubber component is within the above-mentioned range, the tackiness before vulcanization and the adhesiveness after vulcanization are improved.

(Other Additives)

As with the first polymer composition, the second polymer composition can contain additives such as sulfur, stearic acid, zinc oxide, an antioxidant, a vulcanization accelerator, and the like. The types and the amounts thereof can be adjusted as appropriate, depending on the required properties.

(Thickness of Second Layer)

The average thickness of the second layer is preferably not less than 0.01 mm and not more than 0.3 mm. As used herein, the thickness of the second layer when the second layer is constituted of a single layer refers to the thickness thereof, and the thickness of the second layer when the second layer has a multilayer structure such as a two-layer structure refers to a total thickness of the multilayer structure. If the thickness of the second layer is less than 0.01 mm, the second layer may be broken by a pressing pressure during the vulcanization of a green tire in which the inner liner is used, which may cause vulcanization adhesive strength to deteriorate. On the other hand, if the thickness of the second layer exceeds 0.3 mm, the weight of the tire will increase, and the fuel efficiency performance will deteriorate. The thickness of the second layer is preferably not less than 0.05 mm and not more than 0.2 mm.

The second layer can be obtained by forming a polymer composition containing at least any of the SIS and SIB and optionally added additive(s) into a film by using a general method of forming a thermoplastic resin or a thermoplastic elastomer into a film, such as extrusion molding or calender molding.

In the polymer composition of the second layer, the SIB or SIS, which is a thermoplastic elastomer, forms a matrix phase, and the rubber component is dispersed as an island phase. Additive components such as sulfur react with this state to cause the rubber component in the island phase to undergo a crosslinking reaction. The rubber component is dynamically crosslinked in an extruder. Since the matrix phase is made of a thermoplastic elastomer component, the shear viscosity of the entire system is maintained low, and hence, extrusion molding is possible.

(Other Polymer Components of First Polymer Composition and Second Polymer Composition)

Each of the first polymer composition and the second polymer composition may be mixed with one or more thermoplastic elastomers, as other polymer components, selected from the group consisting of a styrene-isoprene butadiene-styrene copolymer, a styrene-ethylene butene-styrene copolymer, a styrene-ethylene propylene-styrene copolymer, a styrene-ethylene-ethylene-propylene-styrene copolymer, a styrene-butadiene - butylene-styrene copolymer), and a thermoplastic elastomer obtained by introducing an epoxy group into any of the above. An example of the thermoplastic elastomer having an epoxy group may be an epoxy-modified styrene-butadiene-styrene copolymer (a specific example is an epoxized SBS, "Epofriend A1020", manufactured by Daicel Chemical Industries, Ltd., weight-average molecular weight: 100,000, epoxy equivalent: 500).

<Structure of Inner Liner>

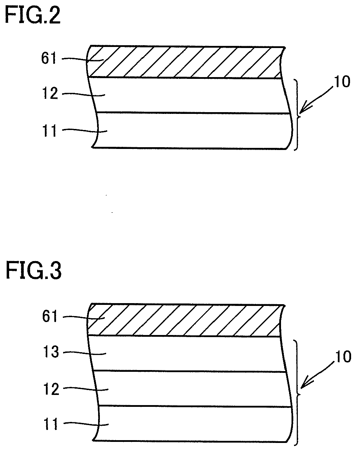

The structure of the inner liner will be described with Figs. 2 and 3.

(First Embodiment)

In Fig. 2, an inner liner 10 is constituted of a first layer 11 and a second layer 12. Inner liner 10 is disposed outwardly in the tire radius direction such that second layer 12 comes into contact with carcass ply 61. This can improve adhesive strength between second layer 12 and carcass ply 61 in the vulcanization step of a tire. A polymer laminate can be obtained using the polymer composition of the first layer and the polymer composition of the second layer, by performing lamination extrusion such as laminate extrusion or co-extrusion in the order illustrated in Fig. 2.

(Second Embodiment)

In Fig. 3, inner liner 10 is constituted of first layer 11, second layer 12, and a rubber sheet layer 13. Inner liner 10 is disposed outwardly in the tire radius direction such that rubber sheet layer 13 comes into contact with carcass ply 61. This can improve adhesive strength between rubber sheet layer 13 and carcass ply 61 in the vulcanization step of the tire.

EP 2 921 321 B1

<Method of Manufacturing Pneumatic Tire>

A pneumatic tire can be produced using a general manufacturing method. Specifically, a pneumatic tire can be manufactured by using inner liner 10 as the inner liner of a green tire for pneumatic tire 1, and vulcanization-molding it together with other members. When inner liner 10 is placed on the green tire, it is placed outwardly in the tire radius direction such that second layer 12 or rubber sheet layer 13 of polymer laminate 10 comes into contact with carcass ply 6. That is, first layer 11 is placed inwardly in the tire radius direction. This placement can improve adhesive strength between the second layer or rubber sheet layer 13, and carcass ply 6 in the tire vulcanization step.

It should be noted here that the thermoplastic elastomer and the rubber component constituting each of the first layer and the second layer of the inner liner are in a softened state (an intermediate state between a solid and a liquid) within a mold at a temperature during vulcanization, from 150 to 180°C, for example. Therefore, when the mold is opened after the vulcanization, the inner liner will become deformed if the thermoplastic elastomer and the rubber component are in the softened state. Furthermore, since the thermoplastic elastomer and the rubber component are more reactive when in the softened state than in the solid state, they may stick or adhere to the adjacent members.

A cooling step is thus preferably provided after vulcanization. As a cooling method, the thermoplastic elastomer and the rubber component directly after the vulcanization can be quenched for 10 seconds or longer at 120°C or below to be solidified. The cooling may be performed by quenching the inside of the bladder at a temperature in the range of 50 to 120°C. For a coolant, one or more of coolants selected from air, water vapor, water, and oil can be used.

The cooling time is preferably 10 to 300 seconds. If the cooling time is shorter than 10 seconds, the thermoplastic elastomer and the rubber component are not sufficiently cooled, and the inner liner may still be fused to the bladder when the mold is opened, which may cause an air-in phenomenon. If the cooling time exceeds 300 seconds, the productivity will become lower. The cooling time is preferably 30 to 180 seconds.

Example 1

[Examples 1 to 5 and Comparative Examples 1 to 7]

<Preparation of Thermoplastic Elastomers>

The SIB, SIBS, and SIS to be used for the first layer and the second layer were prepared as follows.

(SIB)

Into a 2-L reaction vessel equipped with a stirrer, 589 mL of methylcyclohexane (dried over molecular sieves), 613 mL of n-butyl chloride (dried over molecular sieves), and 0.550 g of cumyl chloride were added. The reaction vessel was cooled to -70°C, and then 0.35 mL of $\alpha$-picoline (2-methylpyridine) and 179 mL of isobutylene were added. Further, 9.4 mL of titanium tetrachloride was added to initiate polymerization, and the reaction was performed for 2.0 hours while stirring the solution at -70°C. Next, 59 mL of styrene was added to the reaction vessel, and the reaction was continued for another 60 hours, and then a large amount of methanol was added to stop the reaction. After removing the solvent and the like from the reaction mixture, the polymer was dissolved in toluene and washed with water twice. This toluene solution was added to a methanol mixture to precipitate a polymer, and the resulting polymer was dried for 24 hours at 60°C to afford a styrene-isobutylene diblock copolymer.

Styrene component content: 15% by mass
Weight-average molecular weight: 70,000

(SIBS)

SIBSTAR 102T (Shore A hardness: 25, styrene component content: 25% by mass, and weight-average molecular weight: 100,000), manufactured by Kaneka Corporation, was used.

(SIS)

D1161JP (styrene component content: 15% by mass, weight-average molecular weight: 150,000), manufactured by Kraton Polymers, was used.

<Production of Pneumatic Tire>

In accordance with the compounding formulations shown in Tables 1 and 2, the compounding ingredients were introduced into a twin-screw extruder (screw diameter: φ 50 mm, L/D: 30, cylinder temperature: 200°C), and kneaded at 200 rpm to form pellets. The resulting pellets were introduced into a T-die extruder (screw diameter: φ 80 mm, L/D: 50, die gap width: 500 mm, cylinder temperature: 220°C, film gauge: 0.3 mm) in accordance with the specifications shown in Table 3, and polymer sheets for inner liners were produced. At this time, in order to adjust the thicknesses of bead region Rb and buttress region Rs in each inner liner, an extrusion port of the polymer sheet was provided with a profile, and an integrated sheet having a smaller thickness Gs in the buttress region was produced.

The resulting polymer sheets for inner liners were used for 195/65R15-size pneumatic tires having the basic structure illustrated in Fig. 1 to produce green tires, which were press-molded for 20 minutes at 170°C in the subsequent vulcanization step.

[Table 1]

| | | Example Formulation | | | | Comparative Formulation | | |
|---|---|---|---|---|---|---|---|---|
| | | A1 | A2 | A3 | A4 | A5 | A6 | A7 |
| Formulation (Part(s) by Mass) | IIR (Note 1) | 30 | 95 | - | - | - | - | 98 |
| | NR (Note 2) | - | - | 30 | - | - | 98 | - |
| | Isoprene Rubber (Note 3) | - | - | - | 95 | - | - | - |
| | SIBS (Note 4) | 70 | 5 | 70 | 5 | 100 | 2 | 2 |
| | Stearic Acid (Note 5) | 3 | 3 | 3 | 3 | 3 | 3 | 3 |
| | Zinc Oxide (Note 6) | 5 | 5 | 5 | 5 | 5 | 5 | 5 |
| | Antioxidant (Note 7) | 1 | 1 | 1 | 1 | 1 | 1 | 1 |
| | Vulcanization Accelerator (Note 8) | 1 | 1 | 1 | 1 | 1 | 1 | 1 |
| | Sulfur (Note 9) | 0.5 | 0.5 | 0.5 | 0.5 | 0.5 | 0.5 | 0.5 |

[Table 2]

| | | Example Formulation | | | | | | Comparative Formulation | |
|---|---|---|---|---|---|---|---|---|---|
| | | B1 | B2 | B3 | B4 | B5 | B6 | B7 | B8 |
| Formulation (Part(s) by Mass) | SIS (Note 10) | 10 | - | 80 | 85 | 10 | 80 | 100 | - |
| | SIB (Note 11) | - | 10 | - | - | - | - | - | 100 |
| | IIR (Note 1) | 90 | 90 | 20 | 15 | - | - | - | - |
| | NR (Note 2) | - | - | - | - | - | 20 | - | - |
| | Isoprene Rubber (Note 3) | - | - | - | - | 90 | - | - | - |
| | Stearic Acid (Note 5) | 3 | 3 | 3 | 3 | 3 | 3 | 3 | 3 |
| | Zinc Oxide (Note 6) | 5 | 5 | 5 | 5 | 5 | 5 | 5 | 5 |
| | Antioxidant (Note 7) | 1 | 1 | 1 | 1 | 1 | 1 | 1 | 1 |
| | Vulcanization Accelerator (Note 8) | 1 | 1 | 1 | 1 | 1 | 1 | 1 | 1 |
| | Sulfur (Note 9) | 0.5 | 0.5 | 0.5 | 0.5 | 0.5 | 0.5 | 0.5 | 0.5 |

(Note 1) IIR: "Exxon Chlorobutyl 1066" manufactured by Exxon Mobil Corporation.
(Note 2) NR: natural rubber TSR20.
(Note 3) Isoprene rubber: "Nipol IR2200" manufactured by Zeon Corporation.
(Note 4) SIBS: "SIBSTAR 102T" manufactured by Kaneka Corporation (styrene-isobutylene-styrene triblock copolymer, weight-average molecular weight: 100,000, styrene component content: 25% by mass, and Shore A hardness: 25).
(Note 5) Stearic acid: "Stearic Acid Lunac S30" manufactured by Kao Corporation
(Note 6) Zinc oxide: "Zinc White No.1" manufactured by Mitsui Mining & Smelting Co., Ltd.

(Note 7) Antioxidant: "Noclac 6C" (N-(1,3-dimethylbutyl)-N'-phenyl-p-phenylenediamine) manufactured by Ouchi Shinko Chemical Industrial Co., Ltd.

(Note 8) Vulcanization accelerator: "Nocceler DM" (di-2-benzothiazolyldisulfide) manufactured by Ouchi Shinko Chemical Industrial Co., Ltd.

(Note 9) Sulfur: "Sulfur Powder" manufactured by Tsurumi Chemical Industry Co., Ltd.

(Note 10) SIS: "D1161JP" manufactured by Kraton Performance Polymers Inc. (styrene-isoprene-styrene triblock copolymer, a weight-average molecular weight: 150,000, styrene unit content: 15% by mass)

(Note 11) SIB: the same SIB as obtained in <Preparation of Thermoplastic Elastomers> above (styrene-isobutylene diblock copolymer, weight-average molecular weight: 70,000, styrene component content: 15% by mass).

<Evaluation Tests>

The following tests were conducted on the polymer sheets for inner liners and the pneumatic tires.

(Vulcanization Adhesive Strength Between First Layer and Second Layer)

Samples for measurement of vulcanization adhesive strength were produced by heating the polymer sheets for inner liners for 20 minutes at 170°C. Peel force was measured in a tensile peel test as vulcanization adhesive strength. In accordance with the equation shown below, the vulcanization adhesive strength of each polymer sheet was expressed as an index, using Example 1 as the reference value (100). The greater the index of vulcanization adhesive strength, the higher the vulcanization adhesion strength, which is preferable.

$$\text{(index of vulcanization adhesive strength)} = \text{(vulcanization adhesive strength of each formulation)}/\text{(vulcanization adhesive strength of Comparative Example 1)} \times 100$$

(Static Air Pressure Drop Rate)

Each of the pneumatic tires was mounted on a JIS standard rim 15 x 6JJ, and an initial air pressure of 300 Kpa was applied. The tire was left at room temperature for 90 days, and an air pressure drop rate (%/month) was calculated.

(Rolling Resistance)

Using a rolling resistance tester manufactured by KOBE STEEL, LTD., each pneumatic tire was mounted on a JIS standard rim 15 x 6JJ, and rolling resistance was measured while driving the tire at room temperature (38°C) under the conditions of a load of 3.4 kN, an air pressure of 230 kPa, and a speed of 80 km/hour. In accordance with the equation shown below, the rolling resistance of the pneumatic tire was expressed as an index, using Comparative Example 1 as the reference value (100). The greater the rolling resistance index, the smaller the rolling resistance, which is preferable.

$$\text{(rolling resistance index)} = \text{(rolling resistance of Comparative Example 1)}/\text{(rolling resistance of each pneumatic tire)} \times 100$$

(Crack Resistance Performance)

A running endurance test was conducted to evaluate whether the inner liner was cracked or peeled off. Each pneumatic tire was mounted on a JIS standard rim 15 x 6JJ, and the tire internal pressure was set to 150 KPa, which was lower than normal. With the load being set to 600 kg, the speed 100 km/h, and the mileage 20,000 km, the inside of the tire was observed, and the number of cracks and peeled portions was measured. The crack growth resistance of each pneumatic tire was expressed as an index, using Comparative Example 1 as a reference. The greater the value of the index, the smaller the flex crack growth.

$$\text{(index of flex crack growth)} = \text{(number of cracks in Comparative Example 1)}/\text{(number of cracks in each Example)} \times 100$$

(Riding Comfort)

Each tire was mounted on a front-engine, rear-wheel-drive passenger car having a displacement of 2000 cm³. The internal pressure of the tire was set to 230 kPa. This passenger car was subjected to a running test on an asphalt road, and a sensory evaluation by the driver was made on riding comfort. The shock absorbing property was evaluated as the riding comfort. The riding comfort was expressed as an index, using Comparative Example 1 as the reference (100). The higher the score, the better the riding comfort.

The results are shown in Table 3.

[Table 3]

| | | | Example | | | | | Comparative Example | | | | | | |
|---|---|---|---|---|---|---|---|---|---|---|---|---|---|---|
| | | | 1 | 2 | 3 | 4 | 5 | 1 | 2 | 3 | 4 | 5 | 6 | 7 |
| Structure of Inner Liner | First Layer | Layer Thickness (mm) | 0.25 | 0.25 | 0.25 | 0.25 | 0.25 | 0.25 | 0.25 | 0.25 | 0.25 | 0.25 | 0.25 | 0.25 |
| | | Formulation Used | A1 | A1 | A2 | A2 | A1 | A5 | A5 | A6 | A6 | A7 | A1 | A1 |
| | Second Layer | Layer Thickness (mm) | 0.05 | 0.05 | 0.05 | 0.05 | 0.05 | 0.05 | 0.05 | 0.05 | 0.05 | 0.05 | 0.05 | 0.05 |
| | | Formulation Used | B1 | B3 | B2 | B4 | B1 | B7 | B8 | B7 | B8 | B7 | B1 | B1 |
| | Thinner Portion | Thickness Gs (mm) | 0.15 | 0.15 | 0.15 | 0.15 | 0.21 | 0.15 | 0.15 | 0.15 | 0.15 | 0.15 | 0.09 | 0.3 |
| | | Thickness Ratio Gs/Gb | 0.5 | 0.5 | 0.5 | 0.5 | 0.7 | 0.5 | 0.5 | 0.5 | 0.5 | 0.5 | 0.3 | 1.0 |
| Performance Evaluation | Vulcanization Adhesive Strength Between First Layer and Second Layer (Index) | | 370 | 320 | 525 | 525 | 370 | 100 | 100 | 545 | 545 | 495 | 370 | 370 |
| | Static Air Pressure Drop Rate (%/Month) | | 1.9 | 1.8 | 2.0 | 2.0 | 1.9 | 2.0 | 2.0 | 3.9 | 3.9 | 3.9 | 2.2 | 1.9 |
| | Rolling Resistance (Index) | | 110 | 101 | 100 | 100 | 107 | 100 | 100 | 94 | 94 | 96 | 129 | 71 |
| | Crack Resistance Performance (Index) | | 137 | 125 | 112 | 120 | 111 | 100 | 100 | 97 | 97 | 98 | 90 | 70 |
| | Riding Comfort (Index) | | 147 | 136 | 129 | 143 | 121 | 100 | 100 | 123 | 122 | 125 | 152 | 87 |

# EP 2 921 321 B1

<Evaluation Results>

Each of Examples 1 to 4 corresponds to a pneumatic tire including an inner liner that uses Example Formulation A1 or A2 for the first layer, and uses any of Example Formulations B 1 to B6 for the second layer. As compared with Comparative Example 1, the vulcanization adhesive strength between the first layer and the second layer, the crack resistance performance, and the riding comfort were improved, and the static air pressure drop rate and the rolling resistance were nearly equal to those in Comparative Example 1.

Comparative Example 2 corresponds to a pneumatic tire including an inner liner that uses Comparative Formulation A5 for the first layer and Comparative Formulation B8 for the second layer. The vulcanization adhesive strength between the first layer and the second layer, the static air pressure drop rate, the riding comfort, and the crack resistance performance were equal to those in Comparative Example 1.

Each of Comparative Examples 3 to 5 corresponds to a pneumatic tire including an inner liner that uses Comparative Formulation A6 or A7 for the first layer and Comparative Formulation B7 or B8 for the second layer. As compared with Comparative Example 1, the vulcanization adhesive strength between the first layer and the second layer was satisfactory, but the static air pressure drop rate was insufficient.

Each of Examples 1 and 5 and Comparative Examples 6 and 7 corresponds to a pneumatic tire including an inner liner that uses Example Formulation A1 for the first layer and Example Formulation B1 for the second layer. Gs/Gb was 0.5 in Example 1, 0.7 in Example 5, 0.3 in Comparative Example 6, and 1.0 in Comparative Example 7. In Examples 1 and 5, the vulcanization adhesive strength between the first layer and the second layer, the crack resistance performance, and the riding comfort were improved, and the static air pressure drop rate and the rolling resistance decreased, as compared with Comparative Example 1. In Comparative Example 6, the static air pressure drop rate increased, and the crack resistance performance was poor, as compared with Comparative Example 1. In Comparative Example 7, the rolling resistance and the static air pressure drop rate increased, and the crack resistance performance was poor, as compared with Comparative Example 1.

INDUSTRIAL APPLICABILITY

The pneumatic tire according to the present invention can be used not only as a pneumatic tire for a passenger car, but also as a pneumatic tire for a truck or a bus, a pneumatic tire for a heavy industrial machine, or the like.

REFERENCE SIGNS LIST

1: pneumatic tire; 2: tread portion; 3: side-wall portion; 4: bead portion; 5: bead core; 6, 61: carcass ply; 7: belt ply; 8: bead apex; 9,10: inner liner; 11: first layer; 12: second layer; 13: rubber sheet layer; Rb: bead region; Rs: buttress region; Le: tire maximum width position; Lt: bead toe; Lu: position corresponding to belt layer end.

**Claims**

1. A pneumatic tire (1) comprising an inner liner (10) on an inner side of said tire (1),
   said inner liner (10) comprising:

   a first layer including a first polymer composition having a polymer component containing not less than 5% by mass and not more than 70% by mass of a styrene-isobutylene-styrene triblock copolymer, and not less than 30% by mass and not more than 95% by mass of at least one rubber component selected from the group consisting of a natural rubber, an isoprene rubber, and a butyl rubber; and
   a second layer including a second polymer composition having a polymer component containing not less than 10% by mass and not more than 85% by mass of at least any of a styrene-isoprene-styrene triblock copolymer and a styrene-isobutylene diblock copolymer, and not less than 10% by mass and not more than 90% by mass of at least one rubber component selected from the group consisting of a natural rubber, an isoprene rubber, and a butyl rubber,
   said first layer being placed inwardly in a tire radius direction,
   **characterized in that** said inner liner (10) has an average thickness Gs in a buttress region Rs from a tire maximum width position to a position corresponding to a belt layer end Lu, and an average thickness Gb in a bead region Rb from said tire maximum width position to a bead toe, a ratio of said average thickness Gs to said average thickness Gb (Gs/Gb) being not less than 0.5 and not more than 0.7.

2. The pneumatic tire (1) according to claim 1, wherein

said average thickness Gs of said buttress region in said inner liner is not less than 0.06 mm and not more than 0.30 mm.

3. The pneumatic tire (1) according to claims 1 or 2, wherein
at least any of said first polymer composition and said second polymer composition contains, based on 100 parts by mass of said polymer component, not less than 0.1 parts by mass and not more than 5 parts by mass of sulfur, not less than 1 part by mass and not more than 5 parts by mass of stearic acid, not less than 0.1 parts by mass and not more than 8 parts by mass of zinc oxide, not less than 0.1 parts by mass and not more than 5 parts by mass of an antioxidant, and not less than 0.1 parts by mass and not more than 5 parts by mass of a vulcanization accelerator.

**Patentansprüche**

1. Luftreifen (1), der einen Innerliner (10) auf eine Innenseite des Reifens (1) umfasst,
wobei der Innerliner (10) umfasst:

eine erste Schicht, die eine erste Polymerzusammensetzung mit einer Polymerkomponente umfasst, die nicht weniger als 5 Masse-% und nicht mehr als 70 Masse-% eines Styrol-Isobutylen-Styrol-Triblockcopolymers und nicht weniger als 30 Masse-% und nicht mehr als 95 Masse-% von zumindest einer Kautschukkomponente enthält, die aus der Gruppe ausgewählt ist, die aus einem Naturkautschuk, einem Isoprenkautschuk und einem Butylkautschuk besteht; und
eine zweite Schicht, die eine zweite Polymerzusammensetzung mit einer Polymerkomponente umfasst, die nicht weniger als 10 Masse-% und nicht mehr als 85 Masse-% von zumindest irgendeinem Styrol-Isopren-Styrol-Triblockcopolymer und einem Styrol-Isobutylen-Diblockcopolymer und nicht weniger als 10 Masse-% und nicht mehr als 90 Masse-% von zumindest einer Kautschukkomponente enthält, die aus der Gruppe ausgewählt ist, die aus einem Naturkautschuk, einem Isoprenkautschuk und einem Butylkautschuk besteht, wobei die erste Schicht in einer Radiusrichtung des Reifens nach innen hin platziert ist,
**dadurch gekennzeichnet, dass** der Innerliner (10) eine mittlere Dicke Gs in einem Endbereich Rs von einer Position maximaler Breite des Reifens zu einer Position, die einem Gürtelschichtende Lu entspricht, und eine mittlere Dicke Gb in einem Wulstbereich Rb von der Position maximaler Breite des Reifens zu einer Wulstzehe aufweist, wobei ein Verhältnis der mittleren Dicke Gs zu der mittleren Dicke Gb (Gs/Gb) nicht kleiner als 0,5 und nicht größer als 0,7 ist.

2. Luftreifen (1) nach Anspruch 1, wobei die mittlere Dicke Gs des Endbereichs in dem Innerliner nicht kleiner als 0,06 mm und nicht größer als 0,30 mm ist.

3. Luftreifen-(1) nach Anspruch 1 oder 2, wobei zumindest eine von der ernsten Polymerzusammensetzung und der zweiten Polymerzusammensetzung bezogen auf 100 Masseteile der Polymerkomponente nicht weniger als 0,1 Masseteile und nicht mehr als 5 Masseteile Schwefel, nicht weniger als 1 Masseteil und nicht mehr als 5 Masseteile Stearinsäure, nicht weniger als 0,1 Masseteile und nicht mehr als 8 Masseteile Zinkoxid, nicht weniger als 0,1 Masseteile und nicht mehr als 5 Masseteile eines Antioxidationsmittels und nicht weniger als 0,1 Masseteile und nicht mehr als 5 Masseteile eines Vulkanisationsbeschleunigers enthält.

**Revendications**

1. Bandage pneumatique (1) comprenant un doublage intérieur (10) sur un côté intérieur dudit pneumatique (1), ledit doublage intérieur (10) comprenant :

une première couche incluant une première composition de polymère ayant un composant polymère qui ne contient pas moins de 5 % en masse et pas plus de 70 % en masse d'un copolymère tribloc styrène-isobutylène-styrène, et qui ne contient pas moins de 30 % en masse et pas plus de 95 % en masse d'au moins un composant de caoutchouc sélectionné parmi le groupe comprenant caoutchouc naturel, caoutchouc isoprène et caoutchouc butyle ; et
une seconde couche incluant une seconde composition de polymère ayant un composant polymère qui ne contient pas moins de 10 % en masse et pas plus de 85 % en masse d'au moins un copolymère quelconque parmi un copolymère tribloc styrène-isoprène-styrène et un copolymère dibloc styrène-isobutylène, et qui ne contient pas moins de 10 % en masse et pas plus de 90 % en masse d'au moins un composant de caoutchouc sélectionné parmi le groupe comprenant caoutchouc naturel, caoutchouc isoprène et caoutchouc butyle, ladite première couche étant placée vers l'intérieur dans une direction radiale du pneumatique, **caractérisé en ce que** ledit doublage intérieur (10) a une épaisseur moyenne Gs dans une région d'épaulement Rs depuis une position de largeur maximum de pneumatique jusqu'à une position correspondant à une extrémité Lu de la couche de ceinture, et une épaisseur moyenne (Gb) dans une région de talon Rb depuis ladite position de largeur maximum du pneumatique jusqu'à un pied du talon, un rapport de ladite épaisseur moyenne Gs sur ladite épaisseur moyenne Gb (Gs/Gb) n'étant pas inférieur à 0,5 et pas supérieur à 0,7.

2. Bandage pneumatique (1) selon la revendication 1, dans lequel ladite épaisseur moyenne Gs de ladite région d'épaulement dans ledit doublage intérieur n'est pas inférieure à 0,06 mm et pas supérieure à 0,30 mm.

3. Bandage pneumatique (1) selon les revendications 1 ou 2, dans lequel l'une au moins de ladite première composition de polymère et de ladite seconde composition de polymère contient, en se basant sur 100 parties en masse dudit composant polymère, pas moins de 0,1 parties en masse et pas plus de 5 parties en masse de soufre, pas moins de 1 partie en masse et pas plus de 5 parties en masse d'acide stéarique, pas moins de 0,1 parties en masse et pas plus de 8 parties en masse d'oxyde de zinc, pas moins de 0,1 parties en masse et pas plus de 5 parties en masse d'un antioxydant, et pas moins de 0,1 parties en masse et pas plus de 5 parties en masse d'un accélérateur de vulcanisation.

FIG.1

FIG.2

FIG.3

## REFERENCES CITED IN THE DESCRIPTION

**Patent documents cited in the description**

- JP 2008174037 A
- EP 2774779 A1
- EP 2415617 A1
- WO 2012157322 A1